# EUROPÄISCHE PATENTSCHRIFT

(11) **EP 1 482 402 B1**
(45) Veröffentlichungstag und Bekanntmachung des Hinweises auf die Patenterteilung: **29.07.2009**
(21) Anmeldenummer: 04005510.5
(22) Anmeldetag: 09.03.2004
(51) Int. Cl.: G06F 5/06

(54) **Verfahren zum Steuern des Füllstandes eines Puffers und Datenverarbeitungssystem hierfür**
Method of controlling the fill level of a buffer and corresponding data processing system
Procédure de contrôle du niveau de remplissage d'un tampon et système de gestion de données correspondant

(30) Priorität: 27.05.2003 DE 10324014
(43) Veröffentlichungstag der Anmeldung: 01.12.2004
(73) Patentinhaber: Micronas GmbH, 79108 Freiburg i. Br. (DE)
(72) Erfinder: Noeske, Carsten, 79286 Glottertal (DE); Merz, Ralf, 79111 Freiburg (DE)
(74) Vertreter: Patentanwälte Westphal, Mussgnug & Partner

(56) Entgegenhaltungen:
- EP-A- 0 768 600
- DE-A1- 3 427 428
- US-A- 5 084 841
- US-A- 5 121 480
- US-A1- 2001 054 121
- PATENT ABSTRACTS OF JAPAN Bd. 1999, Nr. 12, 29. Oktober 1999 (1999-10-29) & JP 11 175310 A (TOSHIBA TEC CORP), 2. Juli 1999 (1999-07-02)

## Beschreibung

Die Erfindung betrifft ein Verfahren zum Steuern des Füllstandes eines Puffers mit den Merkmalen des Oberbegriffs des Anspruchs 1 und ein Datenverarbeitungssystem hierfür.

Ein solches Verfahren ist z.B. aus US 2001/0 054121 A1 bekannt. Dort wir ein blockweises Lesen und Schreiben eines Puffers in einem Datenverarbeitungssystem beschrieben. Wenn der Füllstand des Puffers einen oberen Grenzwert überschreitet, wird das blockweise Lesen von Daten aus dem Puffer ausgesetzt und damit gestoppt. Unterschreitet dagegen der Füllstand des Puffers einen vorgegebenen Grenzwert, so wird das blockweise Lesen gestoppt.

Ein ähnliches Verfahren ist aus EP 0 768 600 A1 bekannt. Allerdings erfolgt dort keine blockweise Verarbeitung der Daten.

Ziel der vorliegenden Erfindung ist es, ein Verfahren zum Steuern des Füllstandes eines Puffers und ein zugehörendes Datenverarbeitungssystem anzugeben, bei dem unterschiedlich schnelle Methoden des Zugriffs auf den Puffer verwendet werden, wobei ein Aussetzen bzw. ein Stoppen des Lese- und/oder Schreibvorgangs hierunter nicht verstanden wird.

Diese Aufgabe wird für das Verfahren mit den Merkmalen des Anspruchs 1 und für das Datenverarbeitungssystem mit den Merkmalen des Anspruchs 6 gelöst.

Die Erfindung leurht darauf dass ein Füllstahdsregister vorgesehen wird, das bei jedem Schreibvorgang in den Puffer inkrementiert und bei jedem Lesevorgang aus dem Puffer dekrementiert wird.Hierdurch jederzeit ein aktueller Füllstandswert vor, der gelesen und ggf. zum Auslösen von Gegenmaßnahmen gegen einen Über- oder Unterlauf benutzt werden kann. Da der Inhalt des Füllstandsregisters jederzeit aktuell ist, kann einem Speicherüber- oder -unterlauf rechtzeitig gegengesteuert werden, oder er kann zumindest sicher erfasst werden.

Erfindungsgemäß werden zum Steuern des Füllstandes unterschiedlich schnelle Methoden des Zugriffs auf den Puffer verwendet. So kann es, solange der Füllstand des Puffers niedrig ist, ausreichend sein, Daten aus dem Puffer jeweils einzeln zu lesen, während es bei Überschreitung eines Grenzwerts notwendig sein kann, auf blockweises Lesen der Daten überzugehen, um diese schneller aus dem Puffer herauszuholen und abzuarbeiten.

Der Grenzwert muss dabei mindestens der Größe eines zu lesenden Blocks entsprechen, da andernfalls das Lesen des Blocks selbst zu einem Speicherunterlauf führen könnte.

Umgekehrt kann es zweckmäßig sein, blockweises Schreiben in den Puffer zuzulassen, solange dessen Füllstand niedrig ist, und die Datenrate durch Sperren des blockweisen Schreibens zu reduzieren, wenn der Füllstand einen zweiten Grenzwert überschreitet. Dieser zweite Grenzwert darf nicht größer sein als die Differenz zwischen der Größe des Puffers und der Größe eines zu lesenden Blocks.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines erfindungsgemäßen Adressgenerators;
- Fig. 2: ein Beispiel eines Daten verarbeitenden Systems, das den Adressgenerator aus Fig. 1 verwendet, und
- Fig. 3: ein Ausführungsbeispiel eines Daten verarbeitenden Systems nach der Erfindung.

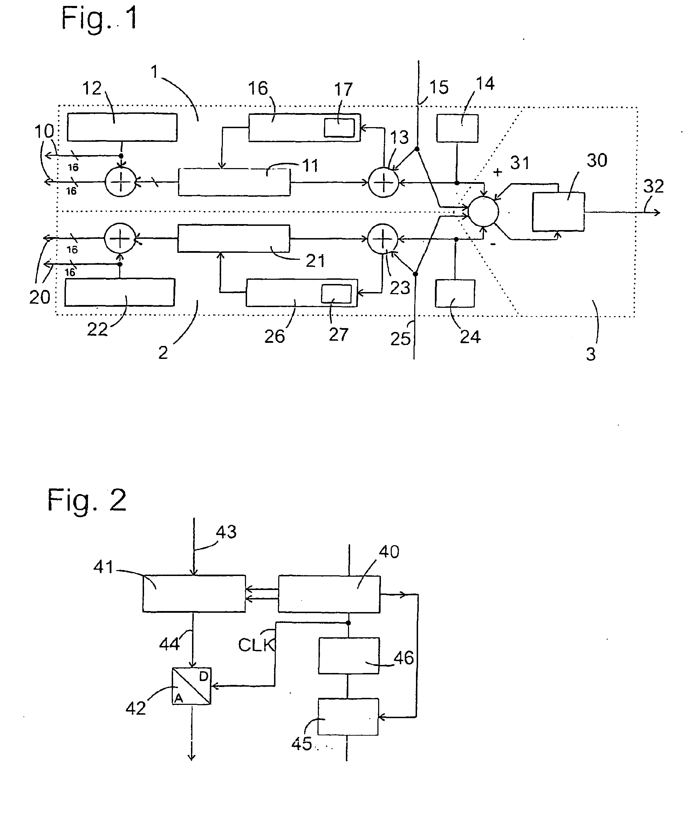

Der in Fig. 1 schematisch gezeigte Adressgenerator kann unterteilt werden in einen Schreibadressen-Generatorabschnitt 1, einen Leseadressen-Generatorabschnitt 2, und einen Füllstandsmessabschnitt 3. Die Struktur der zwei Abschnitte 1, 2 ist im wesentlichen immer die gleiche, so dass nur einer von beiden hier im Detail beschrieben wird; funktionsgleiche Elemente in den zwei Abschnitten haben jeweils bis auf eine vorangestellte 1 oder 2 gleiche Bezugszeichen.

Ein Adressausgang 10 des Schreibadressengenerator-Abschnitts umfasst 32 Bits, darunter eine Gruppe von 16 höherwertigen Bits, die direkt 16 höherwertigen Bits eines Basisadressenregisters 12 entsprechen, und 16 niedrigerwertige Bits, die durch Summation der 16 niedrigerwertigen Bits des Basisadressenregisters 12 und dem Inhalt eines Schreibadressenregisters 11 gebildet sind. Der gleiche Ausgang des Schreibadressenregisters 11 ist an einen ersten Eingang des Addierers 13 angeschlossen, an dessen zweitem Eingang der Inhalt eines Inkrementwertregisters 14 anliegt. Das Inkrementwertregister 14 kann z.B. mit Werten ±1, ±2, ±4 beschrieben sein, je nachdem, ob der Pufferspeicher byte-, 2-byte- oder 4-byte-weise, in ansteigender oder absteigender Richtung gelesen wird.

Der Addierer 13 empfängt ein Triggersignal über einen Triggereingang 15. Der Ausgang des Addierers 13 ist mit einer Modulo-Rechenschaltung 16 verbunden, die ein Register 17 umfasst, in welchem die Länge eines von dem Adressgenerator zu steuernden Puffers abgelegt ist. Ein Ausgang der Modulo-Rechenschaltung 16 ist an einen Dateneingang des Schreibadressenregisters 11 angeschlossen. Die Inhalte der Register 14, 17 sind von außen programmierbar oder durch Schalter einstellbar.

Wenn in den von dem Adressgenerator gesteuerten Puffer ein Datenwert geschrieben werden soll, wird ein Triggerimpuls am Triggereingang 15 angelegt. Dieser Triggerimpuls veranlasst den Addierer 13, die von den Registern 11, 14 ausgegebenen Werte zu addieren und der Modulo-Rechenschaltung 16 zuzuführen. Der Inhalt des Inkrementwertregisters 14 entspricht derjenigen Zahl von Speicherplätzen des Pufferspeichers, die bei einem einzelnen Schreib-(oder Lese)-Zugriff auf den Pufferspeicher gleichzeitig geschrieben (bzw. gelesen) werden können, d.h. der Breite des Datenbusses, an den der Pufferspeicher angeschlossen ist, in Bytes.

Wenn der Inhalt des Inkrementwertregisters 14 positiv ist, der Pufferspeicher also in Richtung ansteigender Adressen beschrieben und gelesen wird, vergleicht die Modulo-Rechenschaltung 16 das Ergebnis der Addition mit dem Inhalt des Längenregisters 17. Wenn das Ergebnis kleiner ist, gibt sie es an das Schreibadressenregister aus, dessen Inhalt durch den neuen Wert überschrieben wird.

Am Adressausgang 10 erscheint daraufhin die Summe aus dem neuen Inhalt des Schreibadressenregisters 11 und des Inhalts des Basisadressenregisters 12, so dass ein durch diese Adresse bezeichnetes Byte des Pufferspeichers (und eventuell, je nach Breite des Datenbusses, ein oder drei darauf folgende) beschrieben werden kann.

Wenn die Modulo-Rechenschaltung 16 feststellt, dass das vom Addierer 13 ausgegebene Ergebnis größer oder gleich der im Register 17 eingetragenen Länge des Puffers ist, so subtrahiert sie den Inhalt des Registers vom Ergebnis des Addierers 13 und gibt die so erhaltene Differenz an das Schreibadressenregister 11 weiter.

Wenn der Inhalt des Inkrementwertregisters 14 negativ ist, so vergleicht die Modulo-Rechenschaltung das Ergebnis mit 0 und, falls es kleiner ist, addiert sie den Inhalt des Längenregisters 17 hinzu. Mit dem Ergebnis überschreibt sie das Schreibadressenregister 11.

Wenn die Schreibadresse ein Ende des Puffers erreicht hat, wird sie auf diese Weise von der Modulo-Rechenschaltung an das gegenüberliegende Ende des Puffers zurückversetzt, und der Puffer wird erneut durchgehend von einem Ende zum anderen beschrieben.

In entsprechender Weise wird der Leseadressen-Generatorabschnitt durch an dessen Triggereingang 25 angelegte Impulse veranlasst, sukzessive Leseadressen an den Puffer auszugeben.

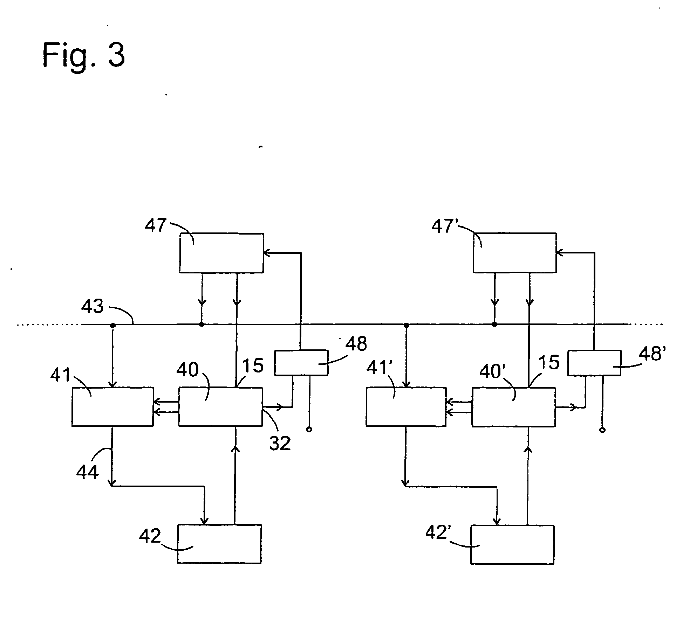

Der Füllstandsmessabschnitt umfasst ein Füllstandsregister 30 und einen Addierer 31, der mit beiden Triggereingängen 15, 25 verbunden ist, um jeweils bei Eintreffen eines Triggersignals bei dem Eingang 15 den Inhalt des Inkrementwertregisters 14 zu dem des Füllstandsregisters 30 hinzuzuaddieren bzw. bei Eintreffen eines Triggersignals am Eingang 25 den Inhalt des Inkrementwertregisters 24 hiervon zu subtrahieren. Wie man leicht sieht, entspricht der Wert im Füllstandsregister 30, wenn dieses, z.B. bei Inbetriebnahme des Pufferspeichers, mit Null initialisiert wird, jederzeit exakt der Zahl der beschriebenen, aber noch nicht gelesenen Speicherplätze im Pufferspeicher. Dieser Zählwert liegt fortlaufend an einem Ausgang 32 des Adressgenerators an und kann zur Steuerung des Datenverkehrs in einem Daten verarbeitendem System herangezogen werden, wie im Folgenden anhand der Ausführungsbeispiele der Fig. 2 und 3 erläutert wird.

In dem Blockdiagramm der Fig. 2 ist der Adressgenerator aus Fig. 1 mit 40 bezeichnet, und der von ihm mit Schreib- und Leseadressen versorge Puffer mit 41. Dem Puffer 41 ist ein D/A-Wandler 42 als Beispiel für eine Datensenke nachgeschaltet. Eine Datenquelle, die von dem D/A-Wandler 42 zu wandelnde digitale Daten an den Puffer 41 über einen Schreibbus 43 liefert, ist in der Figur nicht dargestellt. Ein digital gesteuerter Oszillator 45 und ein diesem nachgeschalteter Frequenzteiler 46 liefern ein Taktsignal CLK an den Adressgenerator 40 und den D/A-Wandler 42, das die Frequenz, mit der Daten aus dem Puffer 41 gelesen und gewandelt werden, bestimmt. Der Oszillator 45 empfängt als Frequenz-Steuersignal den Füllstand des Puffers vom Adressgenerator 40. Innerhalb eines vorgegebenen Abstimmintervalls stellt der Oszillator 45 seine Ausgangsfrequenz umso höher ein, je höher der ihm zugeführte Füllstandswert ist. Das Abstimmintervall ist so festgelegt, dass an seinem oberen Rand die Lesefrequenz höher ist als eine maximal zu erwartende Schreibfrequenz auf dem Schreibbus 43 und am unteren Rand niedriger als eine minimal zu erwartende Schreibfrequenz. Infolgedessen werden bei hohem Zählerstand die Daten schneller aus dem Puffer 41 gelesen, als sie über den Schreibbus 43 nachgeliefert werden, und bei niedrigem Füllstand werden sie langsamer gelesen, so dass in beiden Fällen der Füllstand jeweils zu einem mittleren Wert hin tendiert.

Wenn die Lesefrequenz eine "stetige" Funktion des Zählerstandes ist, so kann auf diese Weise eine weitgehend konstante Datenrate auf dem Lesebus 44 erreicht werden. Denkbar ist aber auch, lediglich zwei oder drei mögliche diskrete Frequenzwerte für den Oszillator 45 vorzusehen, von denen der Oszillator 45 den jeweils höchsten einstellt, wenn der Zählerstand einen oberen Grenzwert überschreitet, und den niedrigsten einstellt, wenn der Zählerstand einen unteren Grenzwert unterschreitet.

Das in Fig. 3 schematisch dargestellte Daten verarbeitende System umfasst eine Mehrzahl von Datenquellen 47, 47', ... die über einen gemeinsam genutzten Schreibbus 43 Daten an jeweils einen ihnen zugeordneten Pufferspeicher 41, 41' ... übertragen. Jede Datenquelle 47, 47', ... ist mit dem Triggereingang 15 des ihr zugeordneten Adressgenerators 40, 40', ... verbunden, um diesen zu veranlassen, eine Schreibadresse bereitzustellen, wenn die Datenquelle 47, 47', .. Daten über den Bus 43 in den Puffer 41, 41', ... schreiben will.

Der Füllstandsausgang 32 jedes Adressgenerators 40, 40', ... ist mit einem Eingang eines Komparators 48, 48', ... verbunden, an dessen zweitem Eingang ein Referenzwert anliegt. Wenn der Zählwert z.B. des Adressgenerators 40 den Referenzwert überschreitet, liefert der Komparator 48 ein Sperrsignal an die Datenquelle 47, welches diese daran hindert, weitere Daten auf dem Schreibbus 43 zu senden. Auf diese Weise bekommt die an den Puffer 41 angeschlossene Datensenke 42 Zeit, die im Puffer 41 angesammelten Daten abzuarbeiten. Da während dieser Zeit die Datenquelle 47 gesperrt ist, konkurriert sie nicht mit anderen Datenquellen 47', ... um Übertragungskapazität auf den Bus 43, was die Übertragungseffektivität dieser letzteren verbessert.

Eine weitere Ausgestaltung eines den Adressgenerator 40 verwendenden Daten verarbeitenden Systems lässt sich ebenfalls anhand des Blockdiagramms der Fig. 3 erläutern, sie unterscheidet sich jedoch in ihrer Wirkungsweise von der zuvor behandelten. Bei dieser weiteren Ausgestaltung unterstützt jede Datenquelle 47, 47', ... wenigstens zwei unterschiedliche Übertragungsmodi, einen ersten Modus, in welchem Datenwerte jeweils einzeln übertragen werden und einen zweiten, in dem jeweils aus einer vorgegebenen Mehrzahl von Datenwerten gebildete Pakete übertragen werden. Wenn die auf dem Schreibbus 43 zur Verfügung stehende Übertragungskapazität dies zulässt, wird man im Allgemeinen den Einzelübertragungsmodus verwenden, da dieser geringere Verzögerungszeiten bei der Übertragung der Daten zur Senke ermöglicht als der Paketmodus. Wenn die Übertragungskapazität des Busses 43 knapp wird, weil viele Datenquellen darauf zugreifen, so führt dies dazu, dass in den zugeordneten Adressgeneratoren 40, 40', ... die Zählerstände abfallen. Die Komparatoren 48, 48', ... dienen hier dazu, die Datenquellen 47, 47', ... jeweils von Einzel- auf Paketübertragung umzuschalten, wenn ein kritisch niedriger Zählerstand unterschritten wird.

Auch in einem Daten verarbeitenden System, in dem nur eine einzige Datenquelle mit einem Puffer über einen Schreibbus verbunden ist, kann es sinnvoll sein, unterschiedliche Übertragungsmodi vorzusehen. In einem solchen System kann z.B. ein Komparator in der Art des Komparators 48 aus Fig. 3 dazu dienen, ein Steuersignal zu erzeugen, welches der Datenquelle bei Überschreitung eines Grenzwertes die Verwendung des Paketmodus verbietet und ihr bei Unterschreitung des Grenzwertes freistellt, ob der Paketmodus verwendet werden soll oder nicht. In einem solchen System kann die Datenquelle die Entscheitung über die Verwendung des Paketmodus ggf. mit Rücksicht auf eine bei ihr vorgepufferte, an den Puffer 41 zu übertragende Datenmenge treffen. So kann die Datenquelle, wenn bei ihr zeitweilig eine hohe Datenrate anfällt, durch Verwendung des Paketmodus den Füllstand des Puffers 41 hochtreiben. Dies ist insbesondere dann zweckmäßig, wenn anhand dieses Füllstands, wie anhand des Beispiels in Fig. 2 beschrieben, die Geschwindigkeit gesteuert wird, mit der die Daten zur Senke übernommen werden.

Obwohl im Zusammenhang mit dem obigen Ausführngsbeispiel davon die Rede ist, dass das Füllstandregister 30 bei jedem Schreibvorgang nur den Puffer 41 inkrementiert wird, ist natürlich auch ein Dekrementieren möglich. Allerdings muss dann bei jedem Lesevorgang aus dem Puffer 41 das Füllstandsregister 30 inkrementiert werden.

## Patentansprüche

1. Verfahren zum Steuern des Füllstands eines Puffers (41), bei dem der Füllstand mit den folgenden Schritten erfasst wird:
a) Initialisieren eines Füllstandsregisters (30),
b) Inkrementieren oder Dekrementieren des Füllstandsregisters (30) bei jedem Schreibvorgang in den Puffer (41),
c) Inkrementieren oder Dekrementieren des Füllstandsregisters (30) bei jedem Lesevorgang aus den Puffer (41);
d) Lesen des Füllstands aus dem Füllstandsregister (30), und bei Unterschreitung eines unteren Grenzwertes des Füllstands die Lesehäufigkeit verringert oder die Schreibhäufigkeit erhöht wird oder bei Überschreitung eines oberen Grenzwerts die Lesehäufigkeit erhöht wird oder die Schreibhäufigkeit verringert wird,
**dadurch gekennzeichnet, dass**
die Lese- oder Schreibhäufigkeit erhöht wird, indem bei einem einbehen Lese- oder Schreibzugriffs auf den Puffer (41) anstelle eines einzelnen Lesens oder Schreibens einer vorgegebenen Anzahl von Speicherplätzen ein blockweises Lesen oder Schreiben von aufeinanderfolgenden dieser Anzahl von Speicherplätzen erfolgt.

2. Verfahren nach Anspruchs 1, bei dem blockweises Lesen aus dem Puffer (41) bei Überschreitung des oberen Grenzwerts freigegeben und bei Unterschreitung des unteren Grenzwerts gesperrt wird.

3. Verfahren nach Anspruch 2, bei dem die Grenzwerte mindestens der Größe eines zu lesenden Blocks entsprechen.

4. Verfahren nach einem der Ansprüche 1 bis 3, bei dem blockweises Schreiben in den Puffer (41) bei Überschreitung des oberen Grenzwerts gesperrt und bei Unterschreitung des unteren Grenzwerts freigegeben wird.

5. Verfahren nach Anspruchs 4, bei dem die Grenzwerte höchstens der Differenz zwischen der Größe des Puffers (41) und der Größe eines zu lesenden Blocks entsprechen.

6. Daten verarbeitendes System mit einem Adressgenerator (40), einem Pufferspeicher (41), einer Datenquelle (43) zum Schreiben von Daten in den Pufferspeicher (41) an vom Adressgenerator (40) bezeichneten Schreibadressen und einer Datensenke zum Lesen von Daten aus dem Pufferspeicher (41) an vom Adressgenerator (40) bezeichneten Leseadressen, wobei der Adressgenerator (49) eingerichtet ist, die Datenrate von der Quelle (43) zum Pufferspeicher (41) und/oder vom Pufferspeicher (41) zur Senke (42) anhand eines erfassten Füllstandes des Pufferspeichers (41) zu steuern,
**dadurch gekennzeichnet, dass** der Adressgenerator (40) eingerichtet ist, bei Überschreitung eines oberen Grenzwerts des Füllstands ein blockweises Lesen einer vorgegebenen Anzahl von Speicherplätzen aus dem Pufferspeicher (41) freizugeben und bei Unterschreitung eines unteren Grenzwertes zu sperren, sodass ein einzelnes Lesen der vorgegebenen Anzahl von Speicherplätzen aus dem Puffer (41) erfolgt, und dass der Adressgenerator (40) eingerichtet ist, bei Unterschreitung eines oberen Grenzwerts des Füllstands ein blockweises Schreiben einer vorgegebenen Anzahl von Speicherplätzen in den Pufferspeicher (41) freizugeben und bei Überschreitung eines unteren Grenzwertes zu sperren, so dass ein einzelnes Schreiben der vorgegebenen Anzahl von Speicherplätzen in den Puffer (41) erfolgt.

## Claims

1. A method of controlling the occupancy level of a buffer (41), in which the occupancy level is recorded by the following steps:
a) initialising an occupancy register (30),
b) incrementing or decrementing the occupancy register (30) for each write operation into the buffer (41),
c) incrementing or decrementing the occupancy register (30) for each read operation from the buffer (41),
d) reading the occupancy level from the occupancy register (30),
and if a lower limit value for the occupancy level is fallen short of, the reading frequency is reduced or the writing frequency is increased, or if an upper limit value is exceeded, the reading frequency is increased or the writing frequency is decreased,
**characterised in that** the reading or writing frequency is increased **in that**, during a single read or write access to the buffer (41), instead of a single reading or writing of a specified number of memory locations, a block-by-block reading or writing of the same number of consecutive memory locations takes place.

2. A method according to Claim 1,
in which, during the block-by-block reading from the buffer (41), an enabling action is performed if the upper limit value is exceeded and a disabling action is performed if the lower limit value is fallen short of.

3. A method according to Claim 2,
in which the limit values correspond at least to the size of a block to be read.

4. A method according to one of Claims 1 to 3,
in which, during the block-by-block writing into the buffer (41), a disabling action is performed when the upper limit value is exceeded and an enabling action is performed when the lower limit value is fallen short off.

5. A method according to Claim 4,
in which the limit values correspond at most to the difference between the size of the buffer (41) and the size of a block to be read.

6. A data-processing system having an address generator (40), a buffer memory (41), a data source (43) for writing data into the buffer memory (41) at write addresses identified by the address generator (40), and a data sink for reading data from the buffer memory (41) at read addresses identified by the address generator (40),
wherein the address generator (49) is set up to control the data rate from the source (43) to the buffer memory (41) and/or from the buffer memory (41) to the sink (42) by means of a recorded occupancy level of the buffer memory (41),
**characterised in that** the address generator (40) is set up to enable a block-by-block reading of a specified number of memory locations from the buffer memory (41) when an upper limit value of the occupancy level is exceeded and to disable said reading when a lower limit value is fallen short of, so that a single reading of the specified number of memory locations from the buffer (41) takes place,
and **in that** the address generator (40) is set up to enable a block-by-block writing of a specified number of memory locations into the buffer memory (41) when an upper limit value of the occupancy level is fallen short of and to disable said writing when a lower limit value is exceeded, so that a single writing of the specified number of memory locations into the buffer (41) takes place.

## Revendications

1. Procédé de commande du niveau de remplissage d'une mémoire tampon (41) selon lequel on saisit le niveau de remplissage en procédant selon les étapes suivantes :
a) initialiser un registre de niveau de remplissage (30),
b) incrémenter ou décrémenter le registre de niveau de remplissage (30) à chaque opération d'inscription dans la mémoire tampon (41),
c) incrémenter ou décrémenter le registre de niveau de remplissage (30) à chaque opération de lecture à partir de la mémoire tampon (41),
d) lire le niveau de remplissage du registre du niveau de remplissage (30) et en cas de dépassement vers le bas d'une valeur limite inférieure du niveau de remplissage, diminuer la fréquence de lecture ou augmenter la fréquence d'écriture ou en cas de dépassement vers le haut d'une valeur limite supérieure, augmenter la fréquence de lecture ou diminuer la fréquence d'écriture,
**caractérisé en ce qu'**
on augmente la fréquence de lecture ou d'écriture **en ce que** pour un unique accès de lecture ou d'écriture dans la mémoire tampon (41), à la place d'une unique lecture ou écriture d'une sélection prédéfinie d'emplacements de mémoire, on procède par blocs à la lecture ou à l'écriture de cette sélection successive d'emplacements de mémoire.

2. Procédé selon la revendication 1,
selon lequel
la lecture par blocs dans la mémoire tampon (41) est libérée en cas de dépassement de la valeur limite supérieure et est interdite en cas de dépassement vers le bas de la valeur limite inférieure.

3. Procédé selon la revendication 2,
selon lequel
les valeurs limites correspondent à au moins une dimension d'un bloc à lire.

4. Procédé selon les revendications 1 à 3,
selon lequel
l'écriture par blocs dans la mémoire tampon (41) est interdite en cas de dépassement vers le haut de la valeur limite supérieure et elle est autorisée en cas de dépassement vers le bas de la valeur limite inférieure.

5. Procédé selon la revendication 4,
selon lequel
les valeurs limites correspondent au maximum à la différence entre la taille de la mémoire tampon (41) et la taille d'un bloc à lire.

6. Système de traitement de données comportant un générateur d'adresses (40), une mémoire tampon (41), une source de données (43) pour inscrire des données dans la mémoire tampon (41) à partir d'adresses d'écriture du générateur d'adresses (40) et un puits de données pour lire les données de la mémoire tampon (41) aux adresses de lecture désignées par le générateur d'adresses (40),
le générateur d'adresses (40) étant conçu pour commander la vitesse des données de la source (43) vers la mémoire tampon (41) et/ou de la mémoire tampon (41) vers le puits (42) à l'aide d'un niveau de remplissage saisi dans la mémoire tampon (41),
**caractérisé en ce que**
le générateur d'adresses (40) est conçu pour libérer la lecture par blocs d'un nombre prédéfini de cellules de mémoire dans la mémoire tampon (41) en cas de dépassement vers le haut d'une valeur limite supérieure du niveau de remplissage, et la bloquer en cas de dépassement vers le bas d'une valeur limite inférieure de manière à avoir une unique lecture de la sélection prédéterminée d'emplacements de mémoire dans la mémoire tampon (41), et
le générateur d'adresses (40) est conçu pour libérer l'écriture par blocs d'un nombre prédéfini d'emplacements de mémoire dans la mémoire tampon (41) en cas de dépassement vers le bas d'une valeur limite supérieure du niveau de remplissage, et la bloquer en cas de dépassement vers le haut d'une valeur limite inférieure, de manière à avoir une écriture unique de la sélection prédéfinie d'emplacements de mémoire dans la mémoire tampon (41).
